# EUROPEAN PATENT APPLICATION

(11) **EP 4 807 656 A1**
(43) Date of publication of application: **16.09.2026**
(21) Application number: 25227388.3
(22) Date of filing: 29.12.2025
(51) Int. Cl.: G06Q 40/12, G06N 20/00, G06N 3/0475

(54) **MACHINE LEARNING FOR PERIOD END CLOSE FOR DISPARATE ENTITIES**

(30) Priority: 11.03.2025 US 202519076609
(71) Applicant: SAP SE, 69190 Walldorf (DE)
(72) Inventor: UDAYASANKAR, Vijayganesh, 69190 Walldorf (DE); S, Aruna Kumari, 69190 Walldorf (DE)
(74) Representative: Müller-Boré & Partner Patentanwälte PartG mbB

(57) **Abstract**

In an example embodiment, a software solution is provided that automates various aspects of a Period End Close (PEC) process and its evaluation. This provides a proactive and autonomous system that addresses complications that occur with prior art ERP systems involving PEC activities and provides graphical user interfaces for interacting with the system.

## Description

### TECHNICAL FIELD

This document generally relates to computer systems. More specifically, this document relates to use of machine learning for period end close processes for disparate entities.

### BACKGROUND

Enterprise Resource Planning (ERP) software integrates, into a single system, various processes used to run an organization, such as finance, manufacturing, human resources, supply chain, services, procurement, and others. These processes typically provide intelligence, visibility, and efficiency across most, if not all, aspects of an organization. One Example of ERP software is SAP^{®} S/4 HANA from SAP SE of Walldorf, Germany.

ERP software is typically made up of multiple applications that share a single database.

### BRIEF DESCRIPTION OF DRAWINGS

The present disclosure is illustrated by way of example and not limitation in the figures of the accompanying drawings, in which like references indicate similar elements.
Figure 1 is a block diagram illustrating an ERP system, in accordance with an example embodiment.
Figure 2 is a diagram illustrating an in-memory database management system, including its client/external connection points, which can be kept stable in the case of disaster recovery to ensure stable service operations, in accordance with an example embodiment.
Figure 3 is a block diagram illustrating a financial accounting application in more detail.
Figure 4 illustrates a diagrammatic representation of a machine in the form of a computer system within which a set of instructions may be executed for causing the machine to perform any one or more of the methodologies discussed herein, according to an example embodiment.
Figure 5 is a first screen capture of a graphical user interface, in accordance with an example embodiment.
Figure 6 is a second screen capture of a graphical user interface, in accordance with an example embodiment.
Figure 7 is a third screen capture of a graphical user interface, in accordance with an example embodiment.
Figure 8 is a fourth screen capture of a graphical user interface, in accordance with an example embodiment.
Figure 9 is a flow diagram illustrating a method of automatically executing a plurality of PEC processes, in accordance with an example embodiment.
Figure 10 is a block diagram illustrating an architecture of software.
Figure 11 illustrates a diagrammatic representation of a machine in the form of a computer system within which a set of instructions may be executed for causing the machine to perform any one or more of the methodologies discussed herein, according to an example embodiment.

### DETAILED DESCRIPTION

The description that follows discusses illustrative systems, methods, techniques, instruction sequences, and computing machine program products. In the following description, for purposes of explanation, numerous specific details are set forth in order to provide an understanding of various example embodiments of the present subject matter. It will be evident, however, to those skilled in the art, that various example embodiments of the present subject matter may be practiced without these specific details.

ERPs are typically used independently by different entities. In this context, an entity may be an organization such as a business or portion of a business. In some instances, however, coordination between different entities using an ERP may be performed. One example would be a joint venture, where two organizations work on a project or set of projects together.

Typically, joint ventures involve some level of sharing of costs and profits (if any) among the entities involved in the joint venture. ERP systems, however, lack the technical ability to adequately process such costs and profits within the time periods typically required by most industries. There may be thousands of joint ventures for a particular company/project and thus tracking them all can be difficult.

More specifically, Period End Close (PEC) processes are critical in ensuring that incurred expenses by the operator are duly allocated to the respective partners, facilitating timely receipt of payments essential for the uninterrupted management of operations. The accuracy and punctuality in completing these processes are paramount to enabling the generation of invoices to non-operating partners within specified timelines.

Given the intricate and dynamic nature of joint venture operations, coupled with substantial data volumes, there exists a potential for errors or inaccuracies due to improper configuration or setup. Such discrepancies can precipitate process failures or yield erroneous outputs, resulting in significant time wastage and adverse financial consequences.

One solution is for users to use an ERP to perform trial runs of the PEC processes prior to the actual PEC execution, to identify any errors that would occur before they occur during a time when such errors could be costly (either in terms of the error itself or the time taken to remedy the error). Such comprehensive testing, however, would require using the entire dataset and all possible scenarios, which is often impractical due to constraints related to time, effort, and cost.

Consequently, users may remain unaware of the actual outcomes until the real execution of the PEC processes. This lack of foresight can lead to unexpected challenges, including process failures, inaccurate results, or data inconsistencies that are typically identified only during manual post-validation activities. These unforeseen issues underscore the need for an improved and proactive approach to managing PEC processes within joint venture operations.

In an example embodiment, a software solution is provided that automates various aspects of the PEC process and its evaluation. This provides a proactive and autonomous system that addresses complications that occur with prior art ERP systems involving PEC activities.

As mentioned before, the timelines to perform PEC activities are usually tightly controlled. In a given month, for example, the first twenty-five days may be a pre-closing period, where no actual PEC activities take place. Days twenty-five through thirty are where the PEC activities occur, followed by a post-closing period.

During the pre-closing period, it is common for there to be some data, but incomplete data. For example, a $100 expense for the joint venture may have been incurred, but the breakdown of which entity is responsible for how much of the expense is not known. This breakdown is commonly not known until the PEC processes are completed. If there are any inconsistencies or problems during closing or detected post-closing, then either the entire period (e.g., month) may need to be reprocessed, or at least the period beginning from when the expense that gave the error was incurred.

In an example embodiment, the software solution uses three phases to allow users to have a picture of the entire period at any point during the period.

In a first phase, resultant key figures of PEC processes are projected. More specifically, this first phase gives the ability to make a quick decision and can be used as a reference data point to verify the actual post-period end close activity. It also give an understanding of the magnitude of any expenditures present in any given joint venture. These key figures are able to be projected on any given day, even during pre-closing. This phase may be referred to as the comprehending phase.

In a second phase, autonomous surveillance of PEC processes during the closing period is performed. Information regarding the autonomous surveillance is available to ERP users in real-time. Various metrics about the PEC process performance may be calculated and presented to users, such as the number of errors per processing unit, along with possible solutions recommended by a recommender system. Volume and time complexity statistics may also be presented to the user, which aids in better process management. Additionally, using results generated in this phase, a predictive analysis can be performed to understand the success rate with respect to the PEC process configuration and data constellation. This phase may be referred to as the perceiving phase.

In a third phase, data correctness analysis and process completeness analysis are performed autonomously. Here, anomalies are detected, and users are notified, along with the possible root cause(s) identified via a deterministic approach. This phase may be referred to as the ascertaining phase. The user can also cross-verify the actual results with the projections made in the first phase.

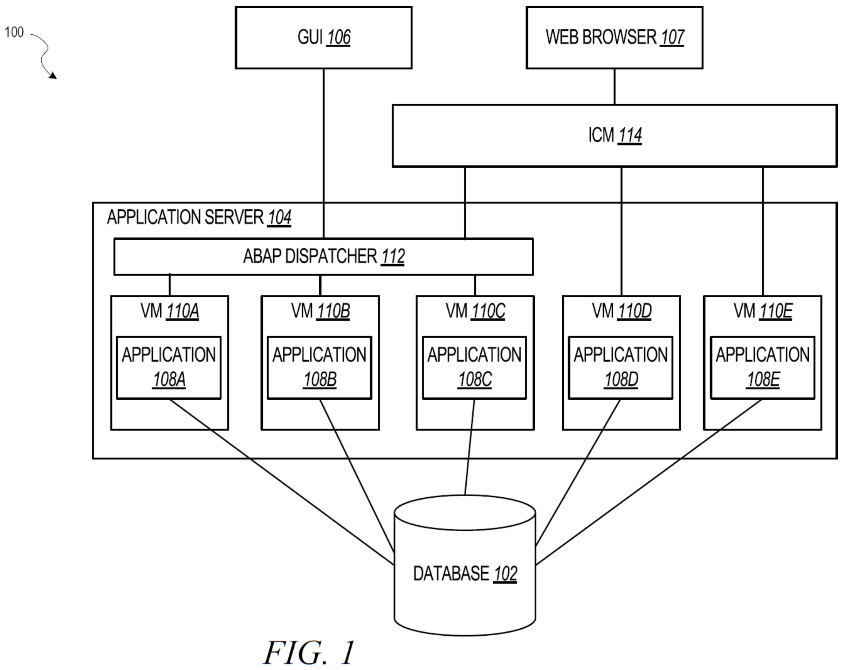

Figure 1 is a block diagram illustrating an ERP system 100, in accordance with an example embodiment. The ERP system 100 may include a database 102, an application server 104, a graphical user interface (GUI) 106 and a web browser 107. The GUI 106 and the web browser 107 are alternative ways for a user to communicate with the application server 104. The database 102 and application server 104 may be located on one or more servers in a cloud environment.

The application server 104 includes one or more ERP applications 108A, 108B, 108C, 108D, 108E. Here, the applications 108A-108E each run on their own virtual machine 110A, 110B, 110C, 110D, 110E, and may be accessed using commands in Advanced Business Application Programming (ABAP) language, via an ABAP dispatcher 112, or using commands in Java from an Internet Communication Manager (ICM) 114. Notably, all of the applications 108A-108E access the same database 102, which has a size. It is this size that the machine learned models of the present solution will attempt to predict.

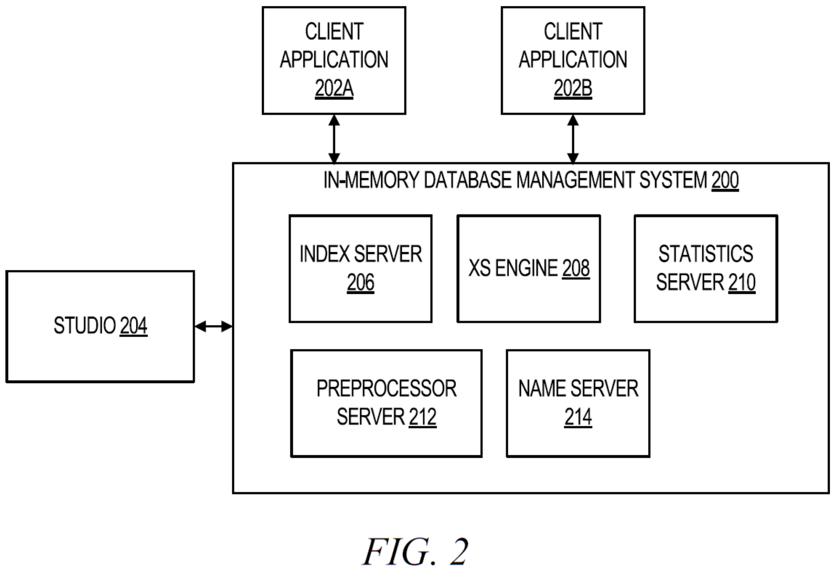

In some example embodiments, the database 102 is an in-memory database. Figure 2 is a diagram illustrating an in-memory database management system 200, including its client/external connection points, which can be kept stable in the case of disaster recovery to ensure stable service operations, in accordance with an example embodiment. It should be noted that one of ordinary skill in the art will recognize that sometimes an in-memory database management system 200 is also referred to as an in-memory database. Here, the in-memory database management system 200 may be coupled to one or more client applications 202A, 202B. The client applications 202A, 202B may communicate with the in-memory database management system 200 through a number of different protocols, including Structured Query Language (SQL), Multidimensional Expressions (MDX), Hypertext Transfer Protocol (HTTP), REST, and Hypertext Markup Language (HTML).

Also depicted is a studio 204, used to perform modeling or basic database access and operations management by accessing the in-memory database management system 200.

The in-memory database management system 200 may comprise a number of different components, including an index server 206, an XS engine 208, a statistics server 210, a preprocessor server 212, and a name server 214. These components may operate on a single computing device or may be spread among multiple computing devices (e.g., separate servers).

The index server 206 contains the actual data and the engines for processing the data. It also coordinates and uses all the other servers.

The XS engine 208 allows clients to connect to the in-memory database management system 200 using web protocols, such as HTTP.

The statistics server 210 collects information about status, performance, and resource consumption from all the other server components. The statistics server 210 can be accessed from the studio 204 to obtain the status of various alert monitors.

The preprocessor server 212 is used for analyzing text data and extracting the information on which text search capabilities are based.

The name server 214 holds information about the database topology. This is used in a distributed system with instances of the database on different hosts. The name server 214 knows where the components are running, and which data is located on which server.

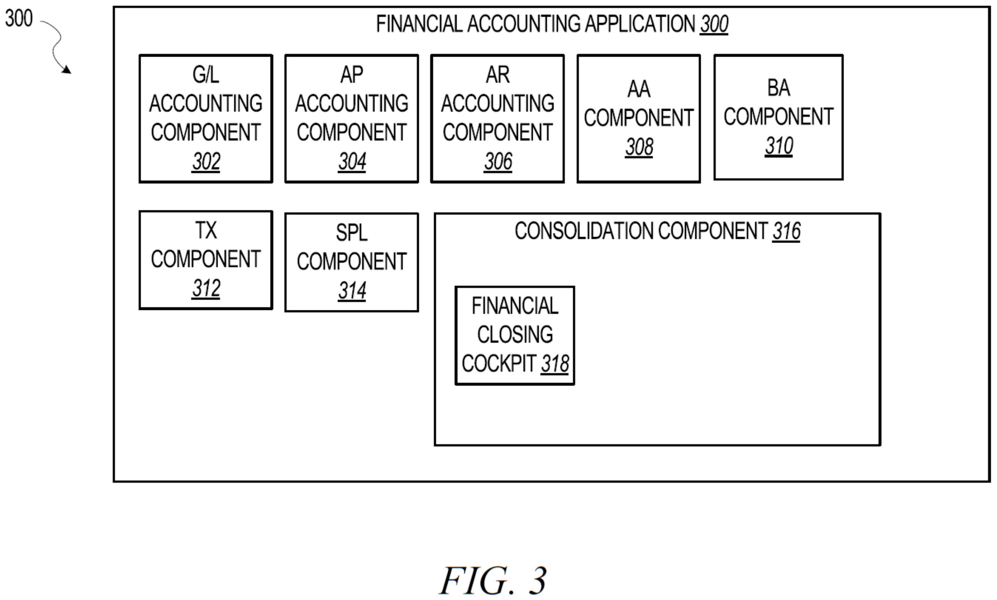

Referring back to Figure 1, one of the applications 108A-108E is a financial accounting application. Figure 3 is a block diagram illustrating a financial accounting application 300 in more detail.

As can be seen, the financial accounting application 300 comprises a series of components. This includes General Ledger (G/L) Accounting component 302, which acts as the central system for all financial transactions, keeping track of accounts like balance sheets and profit & loss statements. An Accounts Payable (AP) component 304 handles the company's debts to suppliers, including processing vendor invoices, payments, and credit memos. An Accounts Receivable (AR) component 306, on the other hand, manages the amounts customers owe, including invoicing, payments, and receipts, and also supports credit management.

An Asset Accounting (AA) component 308 deals with the company's fixed assets throughout their lifecycle, covering acquisition, depreciation, and retirement, while a Bank Accounting (BA) component 310 handles the management of transactions linked to the company's bank accounts, including payments and cash management. For tax compliance, a Tax Accounting (TX) component 312 supports tax calculations and reporting, covering various taxes such as Value Added Tax (VAT), sales tax, and withholding tax.

A Special Purpose Ledger (SPL) component 314 allows businesses to create custom reports or track transactions in ways that might not fit directly into the general ledger structure. A Consolidation component 316 enables group-level financial reporting by consolidating data from multiple entities, ensuring that consolidated financial statements can be prepared accurately.

Within the consolidation component 316 is a financial closing cockpit 318, which is a tool to help automate and manage the PEC tasks. It enables organizations to streamline and control the closing process, providing transparency, collaboration, and efficiency.

The PEC tasks themselves may include the following:

### Overhead

Many joint venture operators apply overhead charges, some of which must be calculated, to cover the indirect costs incurred in operating ventures. After these overhead charges are determined by a Joint Venture Accounting (JVA) Cost Calculations process, the JVA Cutback and Billing processes assign them to the appropriate venture partners. During processing, JVA Cost Calculations collects costs that have a billable recovery indicator (RI), associated with joint ventures within the company for which the process is being executed.

The process sorts these billable costs for the joint ventures by overhead type, such as Construction, Combined Fixed Rate Drilling, or Percentage Producing. JVA Cost Calculations then applies the rule for calculating overhead charges, specified for each overhead type at the joint operating agreement level, to the appropriate joint venture costs.

In the final step of processing, JVA Cost Calculations posts overhead costs to appropriate Financial Accounting application 300 accounts and Controlling application cost objects.

### Pre-Cutback Equity Change

The Pre-Cutback Equity Change Management feature was designed to manage changes in ownership during the current period which may result in expenditures being posted across multiple Venture/Equity Groups. Pre-Cutback Equity Change gives the operator the opportunity to correct these transactions and have all venture expenditures cutback to a single Venture/Equity Group combination. This process reverses postings to the original Venture/Equity Group and rebooks them to the active Venture/Equity Group combination at month end.

### Suspense/Unsuspense

The JVA Suspense process allows the suspension of certain projects and equity groups from cutback and billing processing for a certain period of time. During this time, records booked to these projects and equity groups should not be cutback and billed to the partners. Instead, they are held entirely by the operator until the point in time that they are removed from suspension. There are several possible reasons for projects and equity groups to be placed in suspension. Equity groups may be placed in suspension when partner's shares have yet to be finalized, or projects may be held in suspense if they have yet to be approved by the partners. When one removes the venture, equity group, cost center or projects from suspense, cutback processes all expenses incurred during suspension. Unsuspense is only possible if none of the objects are in suspension.

### Cutback

A joint venture operating partner carries all operating costs throughout the accounting period. At the end of the accounting period, the operator's expenditures are shared by the non-operating partners and the operator, according to their equity shares. This process is called cutback. The JVA cutback process assigns expenses to partners. Cutback accomplishes the following three tasks:
- Prepares partner expense data for the summary invoice
- Posts accounts receivable entries for each partner's share of venture expenses (including posting inter-company expenses directly to associated companies' books)
- Cuts back gross to net expenditure on the operator's own books

### Equity Adjustment

The Equity Adjustment feature was designed to make retroactive changes at the Accounts Receivable level for prior period ownership adjustments. JVA determines the net change in share for each partner, as well as the operator, and posts an adjustment document to the affected partners.

### Netting

JVA offers the processes partner netting and convenience netting to facilitate the period-end closing of customer accounts by performing reconciliation and by preparing for the JVA billing process.

One can use these JVA processes to clear open items and consolidate them into a single new open item. Because they clear postings produced by other JVA processes, the netting programs are run at the end of the period after cutback. The main difference between partner netting and convenience netting is the range of items included in the clearing. Partner netting only includes expense items in clearing, but convenience netting includes revenues, as well as expenses in clearing. Also, partner netting is executed for an operation month, while convenience netting is executed for a billing month.

### Billing

At the end of an accounting period, the joint venture operator recovers venture costs from the non-operating partners. The JVA Billing program is designed to extract relevant billing information from the JVA databases, and to issue invoices and supporting documents to non-operating venture partners. The documents may include some or all of the following:
- Invoice for expenses either at the partner or venture level
- Operating expense statement
- Expenditure detail report
- Supplemental details required for specific items on the invoice or expenditure detail report (e.g. Norway or US)

When executed for the period, the billing program uses a JVA billing indicator, assigned to the entries at posting, to extract the information for the invoice and billing statement. The recovery indicator assigned to entries at posting is used to extract information for the expenditure detail.

### Reporting

JVA reporting transactions enable comprehensive and detailed analysis of financial data across multiple dimensions and currencies. By utilizing these applications, the organization will achieve accurate reporting on:
- Billable and non-billable venture expenses
- Partner net amounts, suspense, and NPI details
- Partner billing details
- Gross amounts for non-operated ventures
The reporting solutions enable seamless drilldown capabilities and multi-currency reporting for current, year-to-date, and inception-to-date analysis, thereby supporting strategic financial decisions and enhancing overall fiscal management.

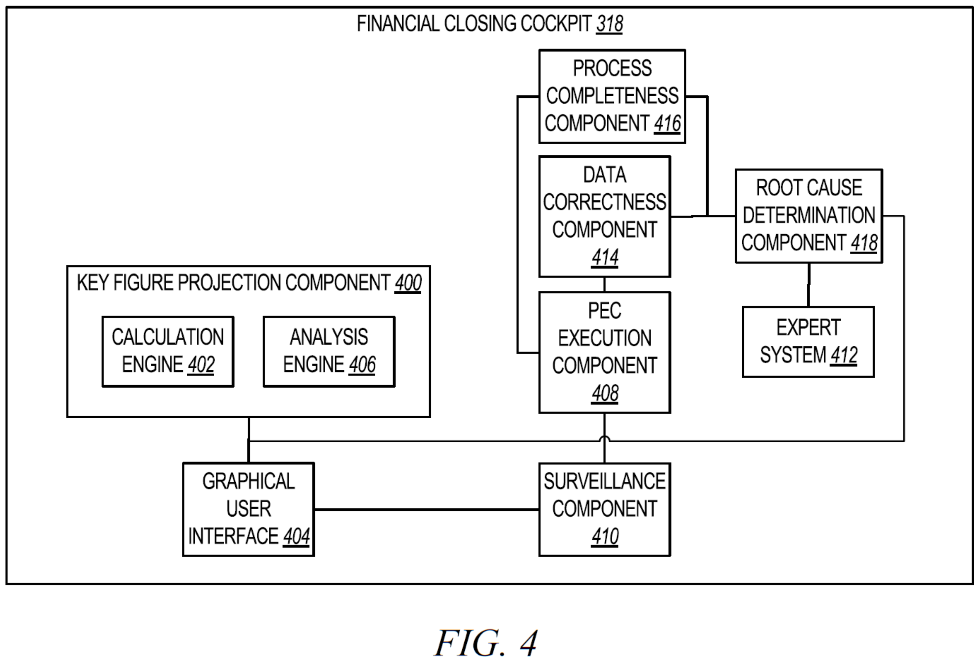

Figure 4 is a block diagram illustrating the financial closing cockpit 318 of Figure 3 in more detail.

A key figure projection component 400 projects key figures of period end close processes. Specifically, a calculation engine 402 identifies one or more focus points based on executed calculations using ERP data relating to the joint venture. One such focus point may be the most frequently occurring error in past executions of the PEC processes. Another such focus point could be which joint venture contains the highest number of expense items. Another such focus point could be which joint venture has encountered the greatest number of issues during PEC processing. Another such focus point could be which partner of which venture contributed the most. As will be described in more detail later, a graphical user interface 404 may be provided that allows the user to view (at any point in any period) the focus points and other calculations, such as key performance indices (KPIs).

An analysis engine 406 then performs automatic analysis of the focus points to project key figures. This may include, for example, projections of breakdowns of which partners are responsible for how much of each expense or revenue source.

In some example embodiments the analysis engine 406 is a rules-based engine that applies one or more predetermined rules to project the key figures.

In other example embodiments, the analysis engine 406 is or includes a machine-learning model. The machine learning model may be trained by any model from among many different potential supervised or unsupervised machine learning algorithms. Examples of supervised learning algorithms include artificial neural networks, Bayesian networks, instance-based learning, support vector machines, linear classifiers, quadratic classifiers, k-nearest neighbor, decision trees, and hidden Markov models.

In an example embodiment, the machine learning algorithm used to train the machine learning model may iterate among various weights (which are the parameters) that will be multiplied by various input variables and evaluate a loss function at each iteration, until the loss function is minimized, at which stage the weights/parameters for that stage are learned. Specifically, the weights are multiplied by the input variables as part of a weighted sum operation, and the weighted sum operation is used by the loss function.

In some example embodiments, the training of the machine learning model may take place as a dedicated training phase. In other example embodiments, the embedding machine learning model may be retrained dynamically at runtime based on feedback.

In some example embodiments, the analysis engine 406 additionally provides scheduling of PEC processes (e.g., selecting which PEC processes to execute and in which order). A PEC execution component 408 then executes the PEC processes according to the schedule.

A surveillance component 410 monitors the execution of the PEC processes by the PEC execution component 408 and interfaces in real-time with the graphical user interface 404 to display real-time data about the execution to a user. This may include displaying figures such as the errors per processing unit. Additionally, through this automated surveillance, the volume and time complexity statistics are presented to the user, which aids in better process management. Additionally, an expert system 412 may be used to recommend possible solutions for each of these errors, and the graphical user interface 404 can additionally display these recommendations to the user. Like with the analysis engine 406, the expert system 412 may be either a rules-based engine or include a machine-learning model, which may be designed and operated using any of the aforementioned techniques that applied to the analysis engine 406. This expert system 412 machine learning model may have been trained with prior errors and prior known solutions to those prior errors until it learns how best to recommend possible solutions to new errors similar to those prior errors.

The expert system 412 is also able to learn, over time, the success rate of the configuration of the PEC processing, such as learning that a particular ordering or selection of PEC processes is suboptimal, and thus recommending a different ordering or selection of PEC processes.

In some example embodiments, the expert system 412 is a contextual artificial intelligence, such as a large language model (LLM). LLMs used to generate information are generally referred to as Generative Artificial Intelligence (GAI) models. A GAI model may be implemented as a generative pre-trained transformer (GPT) model or a bidirectional encoder. A GPT model is a type of machine learning model that uses a transformer architecture, which is a type of deep neural network that excels at processing sequential data, such as natural language.

A bidirectional encoder is a type of neural network architecture in which the input sequence is processed in two directions: forward and backward. The forward direction starts at the beginning of the sequence and processes the input one token at a time, while the backward direction starts at the end of the sequence and processes the input in reverse order.

By processing the input sequence in both directions, bidirectional encoders can capture more contextual information and dependencies between words, leading to better performance. The bidirectional encoder may be implemented as a Bidirectional Long Short-Term Memory (BiLSTM) or BERT (Bidirectional Encoder Representations from Transformers) model.

Each direction has its own hidden state, and the final output is a combination of the two hidden states.

Long Short-Term Memories (LSTMs) are a type of recurrent neural network (RNN) that are designed to overcome the vanishing gradient problem in traditional RNNs, which can make it difficult to learn long-term dependencies in sequential data.

LSTMs include a cell state, which serves as a memory that stores information over time. The cell state is controlled by three gates: the input gate, the forget gate, and the output gate. The input gate determines how much new information is added to the cell state, while the forget gate decides how much old information is discarded. The output gate determines how much of the cell state is used to compute the output. Each gate is controlled by a sigmoid activation function, which outputs a value between 0 and 1 that determines the amount of information that passes through the gate.

In BiLSTM, there is a separate LSTM for the forward direction and the backward direction. At each time step, the forward and backward LSTM cells receive the current input token and the hidden state from the previous time step. The forward LSTM processes the input tokens from left to right, while the backward LSTM processes them from right to left.

The output of each LSTM cell at each time step is a combination of the input token and the previous hidden state, which allows the model to capture both short-term and long-term dependencies between the input tokens.

BERT applies bidirectional training of a model known as a transformer to language modelling. This is in contrast to prior art solutions that looked at a text sequence either from left to right or combined left to right and right to left. A bidirectionally trained language model has a deeper sense of language context and flow than single-direction language models.

More specifically, the transformer encoder reads the entire sequence of information at once and thus is considered to be bidirectional (although one could argue that it is, in reality, non-directional). This characteristic allows the model to learn the context of a piece of information based on all of its surroundings.

In other example embodiments, a generative adversarial network (GAN) embodiment may be used. GAN is a supervised machine learning model that has two sub-models: a generator model that is trained to generate new examples, and a discriminator model that tries to classify examples as either real or generated. The two models are trained together in an adversarial manner (using a zero-sum game according to game theory), until the discriminator model is fooled roughly half the time, which means that the generator model is generating plausible examples.

The generator model takes a fixed-length random vector as input and generates a sample in the domain in question. The vector is drawn randomly from a Gaussian distribution, and the vector is used to seed the generative process. After training, points in this multidimensional vector space will correspond to points in the problem domain, forming a compressed representation of the data distribution. This vector space is referred to as a latent space, or a vector space comprised of latent variables. Latent variables, or hidden variables, are those variables that are important for a domain but are not directly observable.

The discriminator model takes an example from the domain as input (real or generated) and predicts a binary class label of real or fake (generated).

Generative modeling is an unsupervised learning problem, although a clever property of the GAN architecture is that the training of the generative model is framed as a supervised learning problem.

The two models, the generator and discriminator, are trained together. The generator generates a batch of samples, and these, along with real examples from the domain, are provided to the discriminator and classified as real or fake.

The discriminator is then updated to get better at discriminating real and fake samples in the next round, and importantly, the generator is updated based on how well, or not, the generated samples fooled the discriminator.

In another example embodiment, the GAI model is a Variational AutoEncoders (VAEs) model. VAEs comprise an encoder network that compresses the input data into a lower-dimensional representation, called a latent code, and a decoder network that generates new data from the latent code. In either case, the GAI model contains a generative classifier, which can be implemented as, for example, a naïve Bayes classifier.

Referring back to Figure 4, a data correctness component 414 may then, after completion of the PEC processing, perform data analysis to compare the results of the PEC processing to the projected values from the key figure projection component 400. If, for example, these figures do not match within some predefined threshold, then an anomaly may have been detected. Likewise, a process completeness component 416 may then determine whether each of the PEC processes has completed. Again, if any of them have not completed, an anomaly may have been detected.

A root cause determination component 418 may then determine a root cause of any such anomaly, through analysis of the PEC execution logs and ERP data.

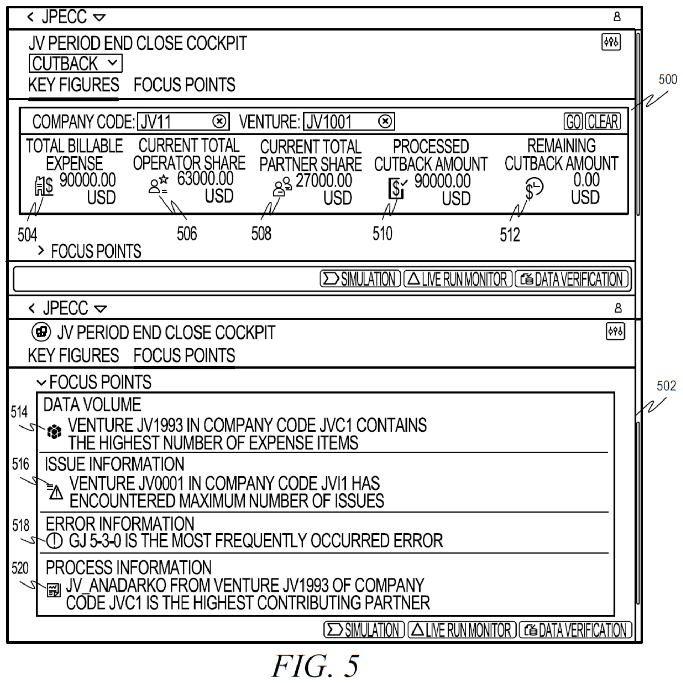

Figure 5 is a first screen capture of a graphical user interface, in accordance with an example embodiment. Here, the graphical user interface contains two windows 500, 502. In the first window 500, various metrics calculated during the first phase may be displayed. This may include, for example, total billable expense 504, current total operator share 506, current total partner share 508, processed cutback amount 510, and remaining cutback amount 512. In the second window, different focus points 514, 516, 518, 520 may be displayed.

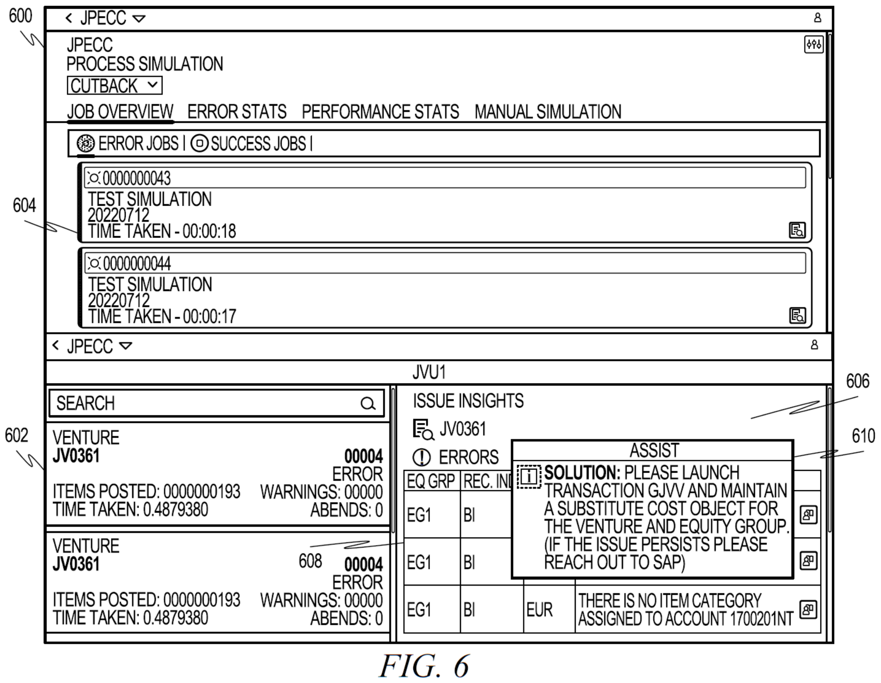

Figure 6 is a second screen capture of a graphical user interface, in accordance with an example embodiment. Again, the graphical user interface contains two windows 600, 602. In the first window 600, results of PEC process execution are displayed, such as result 604. In the second window 602, metric information about the processing pertaining to specific joint ventures are displayed, such as metric information 606, which indicates an error occurred. Section 608 provides additional detail about the error, and an LLM is used to generate a text-based solution 610 to display to the user about how to resolve the error.

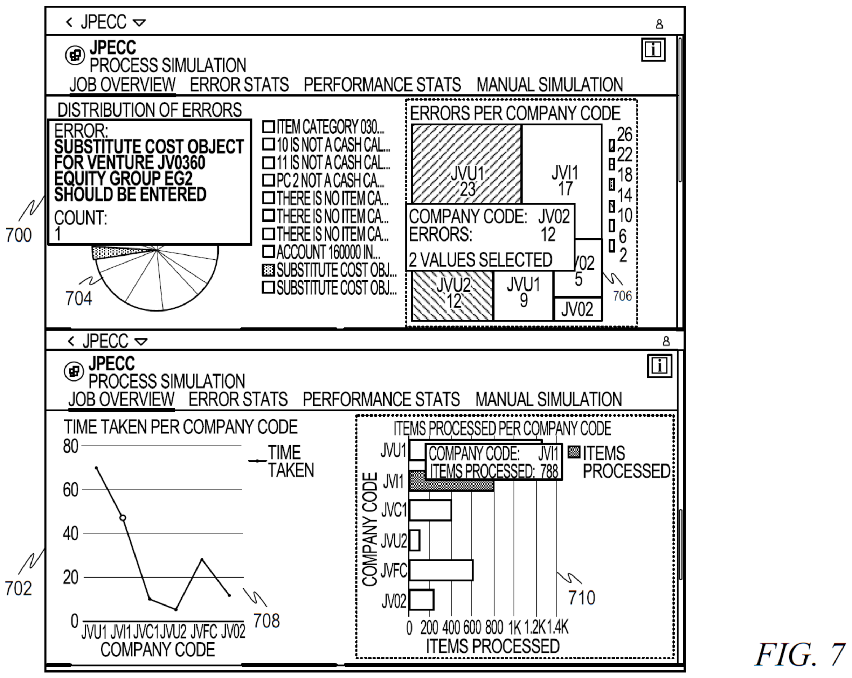

Figure 7 is a third screen capture of a graphical user interface, in accordance with an example embodiment. Again, the graphical user interface contains two windows 700, 702. In the first window 700, two graphical indications 704, 706 of the different types of errors encountered during PEC process execution are depicted. In the second window 702, metrics about the PEC process execution are graphically depicted, including graph 708, depicting the time taken per company code and graph 710, depicting the items processed per company code.

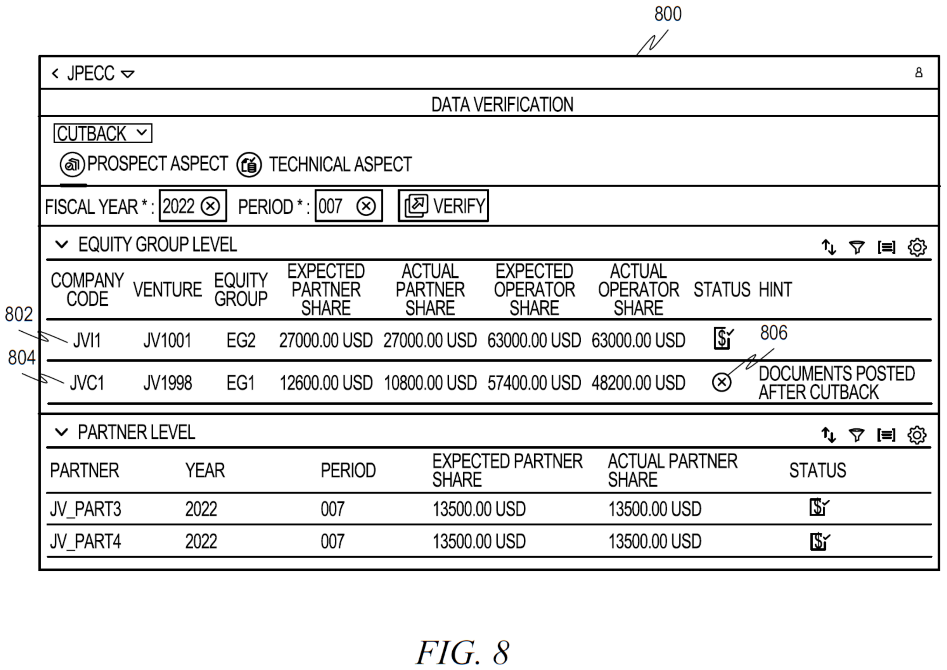

Figure 8 is a fourth screen capture of a graphical user interface, in accordance with an example embodiment. Here, the graphical user interface includes window 800, which depicts a breakdown of post PEC process execution results. This includes, for example, for each company 802, 804 in the joint venture, a breakdown of metrics such as expected partner share, actual partner share, expected operator share, and actual operator share. Scenarios where the expected partner share is too different from the actual partner share or expected operator share is too different from the actual partner share can be indicated using an anomaly indicator 806.

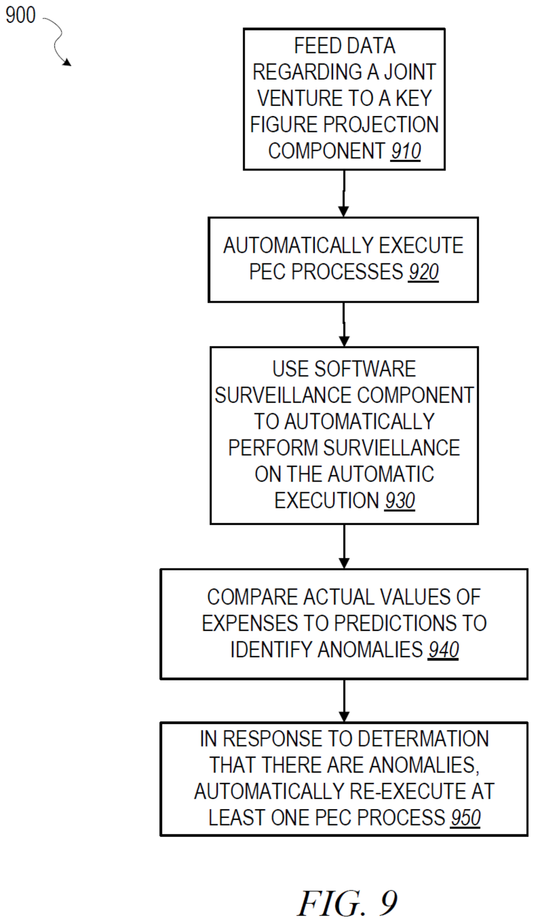

Figure 9 is a flow diagram illustrating a method 900 of automatically executing a plurality of PEC processes, in accordance with an example embodiment.

At operation 910, data from an enterprise resource planning (ERP) system regarding a joint venture among two or more partners is fed to a key figure projection component, which automatically identifies focus points in the data and outputs predictions of values of expenses among the two or more partners.

At step 920, a plurality of period end close (PEC) processes are automatically executed for the joint venture, producing actual values of expenses among the two or more partners.

At step 930, a software surveillance component is used to automatically perform surveillance on the automatic execution of PEC processes to gather performance indicators regarding performance of the automatic execution of PEC processes.

At step 940, the actual values of expenses are compared to the predictions of values of expenses to identify any anomalies in the PEC processes.

At step 950, in response to a determination that there is at least one anomaly in the PEC processes, one or more of the plurality of PEC processes are automatically re-executed.

In view of the disclosure above, various examples are set forth below. It should be noted that one or more features of an example, taken in isolation or combination, should be considered within the disclosure of this application.

Example 1 is a system comprising: at least one hardware processor; and a computer-readable medium storing instructions that, when executed by the at least one hardware processor, cause the at least one hardware processor to perform operations comprising: feeding data from an enterprise resource planning (ERP) system regarding a joint venture among two or more partners to a key figure projection component, which automatically identifies focus points in the data and outputs predictions of values of expenses among the two or more partners; automatically executing a plurality of period end close (PEC) processes for the joint venture, producing actual values of expenses among the two or more partners; using a software surveillance component to automatically perform surveillance on the automatic execution of PEC processes to gather performance indicators regarding performance of the automatic execution of PEC processes; comparing the actual values of expenses to the predictions of values of expenses to identify any anomalies in the PEC processes; and in response to a determination that there is at least one anomaly in the PEC processes, automatically re-executing one or more of the plurality of PEC processes.

In Example 2, the subject matter of Example 1 comprises, wherein the key figure projection component comprises a machine learning model trained using historical data of the ERP system.

In Example 3, the subject matter of Examples 1-2 comprises, a graphical user interface, and wherein the using a software surveillance component comprises displaying the performance indicators in the graphical user interface.

In Example 4, the subject matter of Example 3 comprises, wherein the operations further comprise: passing the data and the performance indicators into an expert recommender system to generate one or more recommendations on improving the performance indicators.

In Example 5, the subject matter of Example 4 comprises, wherein the expert recommender system is a machine learning model.

In Example 6, the subject matter of Example 5 comprises, wherein the machine learning model comprises a large language model (LLM).

In Example 7, the subject matter of Examples 1-6 comprises, wherein the automatically re-executing is performed by identifying a particular process in the plurality of PEC processes in which an anomaly arose and re-executing the particular process and any PEC process run subsequently to the particular process.

Example 8 is a method comprising: feeding data from an enterprise resource planning (ERP) system regarding a joint venture among two or more partners to a key figure projection component, which automatically identifies focus points in the data and outputs predictions of values of expenses among the two or more partners; automatically executing a plurality of period end close (PEC) processes for the joint venture, producing actual values of expenses among the two or more partners; using a software surveillance component to automatically perform surveillance on the automatic execution of PEC processes to gather performance indicators regarding performance of the automatic execution of PEC processes; comparing the actual values of expenses to the predictions of values of expenses to identify any anomalies in the PEC processes; and in response to a determination that there is at least one anomaly in the PEC processes, automatically re-executing one or more of the plurality of PEC processes.

In Example 9, the subject matter of Example 8 comprises, wherein the key figure projection component comprises a machine learning model trained using historical data of the ERP system.

In Example 10, the subject matter of Examples 8-9 comprises, a graphical user interface, and wherein the using a software surveillance component comprises displaying the performance indicators in the graphical user interface.

In Example 11, the subject matter of Example 10 comprises, passing the data and the performance indicators into an expert recommender system to generate one or more recommendations on improving the performance indicators.

In Example 12, the subject matter of Example 11 comprises, wherein the expert recommender system is a machine learning model.

In Example 13, the subject matter of Example 12 comprises, wherein the machine learning model comprises a large language model (LLM).

In Example 14, the subject matter of Examples 8-13 comprises, wherein the automatically re-executing is performed by identifying a particular process in the plurality of PEC processes in which an anomaly arose and re-executing the particular process and any PEC process run subsequently to the particular process.

Example 15 is a non-transitory machine-readable medium storing instructions which, when executed by one or more processors, cause the one or more processors to perform operations comprising: feeding data from an enterprise resource planning (ERP) system regarding a joint venture among two or more partners to a key figure projection component, which automatically identifies focus points in the data and outputs predictions of values of expenses among the two or more partners; automatically executing a plurality of period end close (PEC) processes for the joint venture, producing actual values of expenses among the two or more partners; using a software surveillance component to automatically perform surveillance on the automatic execution of PEC processes to gather performance indicators regarding performance of the automatic execution of PEC processes; comparing the actual values of expenses to the predictions of values of expenses to identify any anomalies in the PEC processes; and in response to a determination that there is at least one anomaly in the PEC processes, automatically re-executing one or more of the plurality of PEC processes.

In Example 16, the subject matter of Example 15 comprises, wherein the key figure projection component comprises a machine learning model trained using historical data of the ERP system.

In Example 17, the subject matter of Examples 15-16 comprises, a graphical user interface, and wherein the using a software surveillance component comprises displaying the performance indicators in the graphical user interface.

In Example 18, the subject matter of Example 17 comprises, wherein the operations further comprise: passing the data and the performance indicators into an expert recommender system to generate one or more recommendations on improving the performance indicators.

In Example 19, the subject matter of Example 18 comprises, wherein the expert recommender system is a machine learning model.

In Example 20, the subject matter of Example 19 comprises, wherein the machine learning model comprises a large language model (LLM).

Example 21 is at least one machine-readable medium comprising instructions that, when executed by processing circuitry, cause the processing circuitry to perform operations to implement of any of Examples 1-20.

Example 22 is an apparatus comprising means to implement of any of Examples 1-20.

Example 23 is a system to implement of any of Examples 1-20.

Example 24 is a method to implement of any of Examples 1-20.

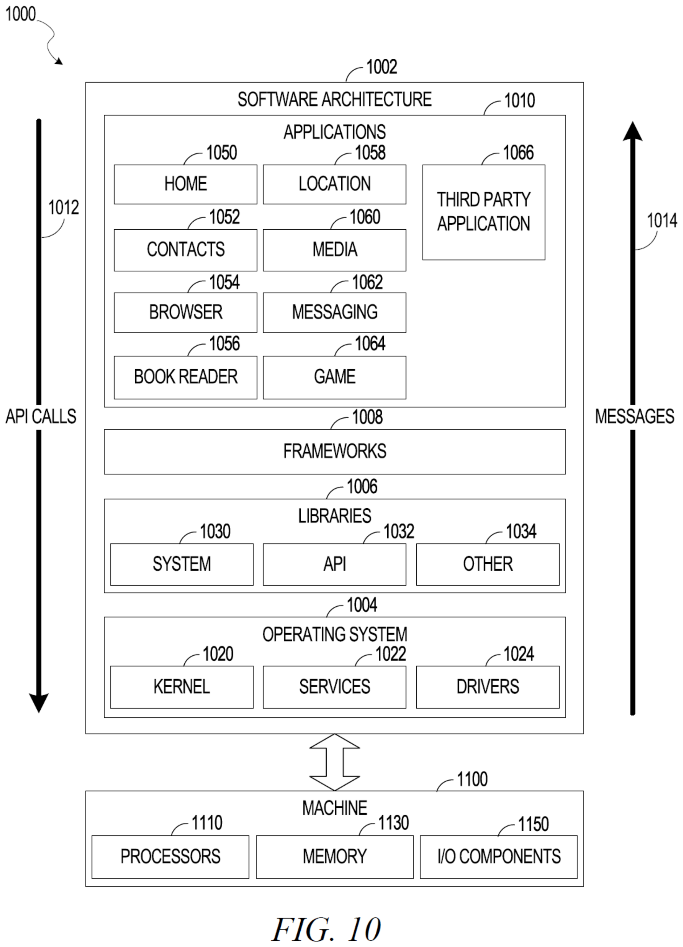

Figure 10 is a block diagram 1000 illustrating a software architecture 1002, which can be installed on any one or more of the devices described above. Figure 10 is merely a non-limiting example of a software architecture, and it will be appreciated that many other architectures can be implemented to facilitate the functionality described herein. In various embodiments, the software architecture 1002 is implemented by hardware such as a machine 1100 of Figure 1 that includes processors 1110, memory 1130, and input/output (I/O) components 1150. In this example architecture, the software architecture 1002 can be conceptualized as a stack of layers where each layer may provide a particular functionality. For example, the software architecture 1002 includes layers such as an operating system 1004, libraries 1006, frameworks 1008, and applications 1010. Operationally, the applications 1010 invoke API calls 1012 through the software stack and receive messages 1014 in response to the API calls 1012, consistent with some embodiments.

In various implementations, the operating system 1004 manages hardware resources and provides common services. The operating system 1004 includes, for example, a kernel 1020, services 1022, and drivers 1024. The kernel 1020 acts as an abstraction layer between the hardware and the other software layers, consistent with some embodiments. For example, the kernel 1020 provides memory management, processor management (e.g., scheduling), component management, networking, and security settings, among other functionalities. The services 1022 can provide other common services for the other software layers. The drivers 1024 are responsible for controlling or interfacing with the underlying hardware, according to some embodiments. For instance, the drivers 1024 can include display drivers, camera drivers, BLUETOOTH^{®} or BLUETOOTH^{®} Low-Energy drivers, flash memory drivers, serial communication drivers (e.g., Universal Serial Bus (USB) drivers), Wi-Fi^{®} drivers, audio drivers, power management drivers, and so forth.

In some embodiments, the libraries 1006 provide a low-level common infrastructure utilized by the applications 1010. The libraries 1006 can include system libraries 1030 (e.g., C standard library) that can provide functions such as memory allocation functions, string manipulation functions, mathematic functions, and the like. In addition, the libraries 1006 can include API libraries 1032 such as media libraries (e.g., libraries to support presentation and manipulation of various media formats such as Moving Picture Experts Group-4 (MPEG4), Advanced Video Coding (H.264 or AVC), Moving Picture Experts Group Layer-3 (MP3), Advanced Audio Coding (AAC), Adaptive Multi-Rate (AMR) audio codec, Joint Photographic Experts Group (JPEG or JPG), or Portable Network Graphics (PNG)), graphics libraries (e.g., an OpenGL framework used to render in two dimensions (2D) and three dimensions (3D) in a graphic context on a display), database libraries (e.g., SQLite to provide various relational database functions), web libraries (e.g., WebKit to provide web browsing functionality), and the like. The libraries 1006 can also include a wide variety of other libraries 1034 to provide many other APIs to the applications 1010.

The frameworks 1008 provide a high-level common infrastructure that can be utilized by the applications 1010, according to some embodiments. For example, the frameworks 1008 provide various GUI functions, high-level resource management, high-level location services, and so forth. The frameworks 1008 can provide a broad spectrum of other APIs that can be utilized by the applications 1010, some of which may be specific to a particular operating system 1004 or platform.

In an example embodiment, the applications 1010 include a home application 1050, a contacts application 1052, a browser application 1054, a book reader application 1056, a location application 1058, a media application 1060, a messaging application 1062, a game application 1064, and a broad assortment of other applications, such as a third-party application 1066. According to some embodiments, the applications 1010 are programs that execute functions defined in the programs. Various programming languages can be employed to create one or more of the applications 1010, structured in a variety of manners, such as object-oriented programming languages (e.g., Objective-C, Java, or C++) or procedural programming languages (e.g., C or assembly language). In a specific example, the third-party application 1066 (e.g., an application developed using the ANDROID^{™} or IOS^{™} software development kit (SDK) by an entity other than the vendor of the particular platform) may be mobile software running on a mobile operating system such as IOS^{™}, ANDROID^{™}, WINDOWS^{®} Phone, or another mobile operating system. In this example, the third-party application 1066 can invoke the API calls 1012 provided by the operating system 1004 to facilitate functionality described herein.

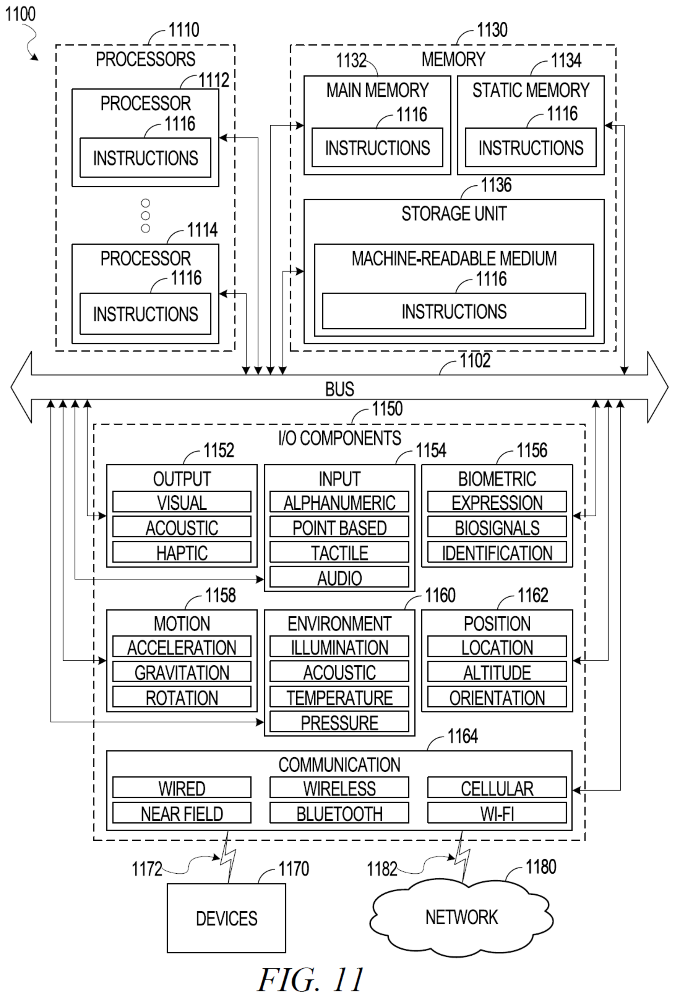

Figure 11 illustrates a diagrammatic representation of a machine 1100 in the form of a computer system within which a set of instructions may be executed for causing the machine 1100 to perform any one or more of the methodologies discussed herein, according to an example embodiment. Specifically, Figure 11 shows a diagrammatic representation of the machine 1100 in the example form of a computer system, within which instructions 1116 (e.g., software, a program, an application, an applet, an app, or other executable code) for causing the machine 1100 to perform any one or more of the methodologies discussed herein may be executed. For example, the instructions 1116 may cause the machine 1100 to execute the method 900 of Figure 9. Additionally, or alternatively, the instructions 1116 may implement Figures 1-9 and so forth. The instructions 1116 transform the general, non-programmed machine 1100 into a particular machine 1100 programmed to carry out the described and illustrated functions in the manner described. In alternative embodiments, the machine 1100 operates as a standalone device or may be coupled (e.g., networked) to other machines. In a networked deployment, the machine 1100 may operate in the capacity of a server machine or a client machine in a server-client network environment, or as a peer machine in a peer-to-peer (or distributed) network environment. The machine 1100 may comprise, but not be limited to, a server computer, a client computer, a personal computer (PC), a tablet computer, a laptop computer, a netbook, a set-top box (STB), a personal digital assistant (PDA), an entertainment media system, a cellular telephone, a smart phone, a mobile device, a wearable device (e.g., a smart watch), a smart home device (e.g., a smart appliance), other smart devices, a web appliance, a network router, a network switch, a network bridge, or any machine capable of executing the instructions 1116, sequentially or otherwise, that specify actions to be taken by the machine 1100. Further, while only a single machine 1100 is illustrated, the term "machine" shall also be taken to include a collection of machines 1100 that individually or jointly execute the instructions 1116 to perform any one or more of the methodologies discussed herein.

The machine 1100 may include processors 1110, memory 1130, and I/O components 1150, which may be configured to communicate with each other such as via a bus 1102. In an example embodiment, the processors 1110 (e.g., a central processing unit (CPU), a reduced instruction set computing (RISC) processor, a complex instruction set computing (CISC) processor, a graphics processing unit (GPU), a digital signal processor (DSP), an application-specific integrated circuit (ASIC), a radio-frequency integrated circuit (RFIC), another processor, or any suitable combination thereof) may include, for example, a processor 1112 and a processor 1114 that may execute the instructions 1116. The term "processor" is intended to include multi-core processors that may comprise two or more independent processors (sometimes referred to as "cores") that may execute instructions 1116 contemporaneously. Although Figure 11 shows multiple processors 1110, the machine 1100 may include a single processor 1112 with a single core, a single processor 1112 with multiple cores (e.g., a multi-core processor 1112), multiple processors 1112, 1114 with a single core, multiple processors 1112, 1114 with multiple cores, or any combination thereof.

The memory 1130 may include a main memory 1132, a static memory 1134, and a storage unit 1136, each accessible to the processors 1110 such as via the bus 1102. The main memory 1132, the static memory 1134, and the storage unit 1136 store the instructions 1116 embodying any one or more of the methodologies or functions described herein. The instructions 1116 may also reside, completely or partially, within the main memory 1132, within the static memory 1134, within the storage unit 1136, within at least one of the processors 1110 (e.g., within the processor's cache memory), or any suitable combination thereof, during execution thereof by the machine 1100.

The I/O components 1150 may include a wide variety of components to receive input, provide output, produce output, transmit information, exchange information, capture measurements, and so on. The specific I/O components 1150 that are included in a particular machine will depend on the type of machine. For example, portable machines such as mobile phones will likely include a touch input device or other such input mechanisms, while a headless server machine will likely not include such a touch input device. It will be appreciated that the I/O components 1150 may include many other components that are not shown in Figure 11. The I/O components 1150 are grouped according to functionality merely for simplifying the following discussion, and the grouping is in no way limiting. In various example embodiments, the I/O components 1150 may include output components 1152 and input components 1154. The output components 1152 may include visual components (e.g., a display such as a plasma display panel (PDP), a light-emitting diode (LED) display, a liquid crystal display (LCD), a projector, or a cathode ray tube (CRT)), acoustic components (e.g., speakers), haptic components (e.g., a vibratory motor, resistance mechanisms), other signal generators, and so forth. The input components 1154 may include alphanumeric input components (e.g., a keyboard, a touch screen configured to receive alphanumeric input, a photo-optical keyboard, or other alphanumeric input components), point-based input components (e.g., a mouse, a touchpad, a trackball, a joystick, a motion sensor, or another pointing instrument), tactile input components (e.g., a physical button, a touch screen that provides location and/or force of touches or touch gestures, or other tactile input components), audio input components (e.g., a microphone), and the like.

In further example embodiments, the I/O components 1150 may include biometric components 1156, motion components 1158, environmental components 1160, or position components 1162, among a wide array of other components. For example, the biometric components 1156 may include components to detect expressions (e.g., hand expressions, facial expressions, vocal expressions, body gestures, or eye tracking), measure biosignals (e.g., blood pressure, heart rate, body temperature, perspiration, or brain waves), identify a person (e.g., voice identification, retinal identification, facial identification, fingerprint identification, or electroencephalogram-based identification), and the like. The motion components 1158 may include acceleration sensor components (e.g., accelerometer), gravitation sensor components, rotation sensor components (e.g., gyroscope), and so forth. The environmental components 1160 may include, for example, illumination sensor components (e.g., photometer), temperature sensor components (e.g., one or more thermometers that detect ambient temperature), humidity sensor components, pressure sensor components (e.g., barometer), acoustic sensor components (e.g., one or more microphones that detect background noise), proximity sensor components (e.g., infrared sensors that detect nearby objects), gas sensors (e.g., gas detection sensors to detect concentrations of hazardous gases for safety or to measure pollutants in the atmosphere), or other components that may provide indications, measurements, or signals corresponding to a surrounding physical environment. The position components 1162 may include location sensor components (e.g., a Global Positioning System (GPS) receiver component), altitude sensor components (e.g., altimeters or barometers that detect air pressure from which altitude may be derived), orientation sensor components (e.g., magnetometers), and the like.

Communication may be implemented using a wide variety of technologies. The I/O components 1150 may include communication components 1164 operable to couple the machine 1100 to a network 1180 or devices 1170 via a coupling 1182 and a coupling 1172, respectively. For example, the communication components 1164 may include a network interface component or another suitable device to interface with the network 1180. In further examples, the communication components 1164 may include wired communication components, wireless communication components, cellular communication components, near field communication (NFC) components, Bluetooth^{®} components (e.g., Bluetooth^{®} Low Energy), Wi-Fi^{®} components, and other communication components to provide communication via other modalities. The devices 1170 may be another machine or any of a wide variety of peripheral devices (e.g., coupled via a USB).

Moreover, the communication components 1164 may detect identifiers or include components operable to detect identifiers. For example, the communication components 1164 may include radio-frequency identification (RFID) tag reader components, NFC smart tag detection components, optical reader components (e.g., an optical sensor to detect one-dimensional bar codes such as Universal Product Code (UPC) bar code, multi-dimensional bar codes such as QR code, Aztec code, Data Matrix, Dataglyph, MaxiCode, PDF417, Ultra Code, UCC RSS-2D bar code, and other optical codes), or acoustic detection components (e.g., microphones to identify tagged audio signals). In addition, a variety of information may be derived via the communication components 1164, such as location via Internet Protocol (IP) geolocation, location via Wi-Fi^{®} signal triangulation, location via detecting an NFC beacon signal that may indicate a particular location, and so forth.

The various memories (e.g., 1130, 1132, 1134, and/or memory of the processor(s) 1110) and/or the storage unit 1136 may store one or more sets of instructions 1116 and data structures (e.g., software) embodying or utilized by any one or more of the methodologies or functions described herein. These instructions (e.g., the instructions 1116), when executed by the processor(s) 1110, cause various operations to implement the disclosed embodiments.

As used herein, the terms "machine-storage medium," "device-storage medium," and "computer-storage medium" mean the same thing and may be used interchangeably. The terms refer to a single or multiple storage devices and/or media (e.g., a centralized or distributed database, and/or associated caches and servers) that store executable instructions and/or data. The terms shall accordingly be taken to include, but not be limited to, solid-state memories, and optical and magnetic media, including memory internal or external to processors. Specific examples of machine-storage media, computer-storage media, and/or device-storage media include non-volatile memory, including by way of example semiconductor memory devices, e.g., erasable programmable read-only memory (EPROM), electrically erasable programmable read-only memory (EEPROM), field-programmable gate array (FPGA), and flash memory devices; magnetic disks such as internal hard disks and removable disks; magneto-optical disks; and CD-ROM and DVD-ROM disks. The terms "machine-storage media," "computer-storage media," and "device-storage media" specifically exclude carrier waves, modulated data signals, and other such media, at least some of which are covered under the term "signal medium" discussed below.

In various example embodiments, one or more portions of the network 1180 may be an ad hoc network, an intranet, an extranet, a virtual private network (VPN), a local-area network (LAN), a wireless LAN (WLAN), a wide-area network (WAN), a wireless WAN (WWAN), a metropolitan-area network (MAN), the Internet, a portion of the Internet, a portion of the public switched telephone network (PSTN), a plain old telephone service (POTS) network, a cellular telephone network, a wireless network, a Wi-Fi^{®} network, another type of network, or a combination of two or more such networks. For example, the network 1180 or a portion of the network 1180 may include a wireless or cellular network, and the coupling 1182 may be a Code Division Multiple Access (CDMA) connection, a Global System for Mobile communications (GSM) connection, or another type of cellular or wireless coupling. In this example, the coupling 1182 may implement any of a variety of types of data transfer technology, such as Single Carrier Radio Transmission Technology (1xRTT), Evolution-Data Optimized (EVDO) technology, General Packet Radio Service (GPRS) technology, Enhanced Data rates for GSM Evolution (EDGE) technology, third Generation Partnership Project (3GPP) including 3G, fourth generation wireless (4G) networks, Universal Mobile Telecommunications System (UMTS), High-Speed Packet Access (HSPA), Worldwide Interoperability for Microwave Access (WiMAX), Long-Term Evolution (LTE) standard, others defined by various standard-setting organizations, other long-range protocols, or other data transfer technology.

The instructions 1116 may be transmitted or received over the network 1180 using a transmission medium via a network interface device (e.g., a network interface component included in the communication components 1164) and utilizing any one of a number of well-known transfer protocols (e.g., HTTP). Similarly, the instructions 1116 may be transmitted or received using a transmission medium via the coupling 1172 (e.g., a peer-to-peer coupling) to the devices 1170. The terms "transmission medium" and "signal medium" mean the same thing and may be used interchangeably in this disclosure. The terms "transmission medium" and "signal medium" shall be taken to include any intangible medium that is capable of storing, encoding, or carrying the instructions 1116 for execution by the machine 1100, and include digital or analog communications signals or other intangible media to facilitate communication of such software. Hence, the terms "transmission medium" and "signal medium" shall be taken to include any form of modulated data signal, carrier wave, and so forth. The term "modulated data signal" means a signal that has one or more of its characteristics set or changed in such a manner as to encode information in the signal.

The terms "machine-readable medium," "computer-readable medium," and "device-readable medium" mean the same thing and may be used interchangeably in this disclosure. The terms are defined to include both machine-storage media and transmission media. Thus, the terms include both storage devices/media and carrier waves/modulated data signals.

## Claims

1. A computer-implemented method comprising:
feeding data from an enterprise resource planning (ERP) system regarding a joint venture among two or more partners to a key figure projection component, which automatically identifies focus points in the data and outputs predictions of values of expenses among the two or more partners;
automatically executing a plurality of period end close (PEC) processes for the joint venture, producing actual values of expenses among the two or more partners;
using a software surveillance component to automatically perform surveillance on the automatic execution of PEC processes to gather performance indicators regarding performance of the automatic execution of PEC processes;
comparing the actual values of expenses to the predictions of values of expenses to identify any anomalies in the PEC processes; and
in response to a determination that there is at least one anomaly in the PEC processes, automatically re-executing one or more of the plurality of PEC processes.

2. The method of claim 1, wherein the key figure projection component comprises a machine learning model trained using historical data of the ERP system.

3. The method of claim 1 or 2, further comprising a graphical user interface, and wherein the using a software surveillance component comprises displaying the performance indicators in the graphical user interface.

4. The method of any one of claims 1 to 3, further comprising:
passing the data and the performance indicators into an expert recommender system to generate one or more recommendations on improving the performance indicators.

5. The method of claim 4, wherein the expert recommender system is a machine learning model.

6. The method of claim 5, wherein the machine learning model comprises a large language model (LLM).

7. The method of any one of claims 1 to 6, wherein the automatically re-executing is performed by identifying a particular process in the plurality of PEC processes in which an anomaly arose and re-executing the particular process and any PEC process run subsequently to the particular process.

8. A system comprising:
at least one hardware processor;
a computer-readable medium storing instructions that, when executed by the at least one hardware processor, cause the at least one hardware processor to perform operations according to a method of any one of claims 1 to 7.

9. A non-transitory machine-readable medium storing instructions which, when executed by one or more processors, cause the one or more processors to perform operations according to a method of any one of claims 1 to 7.
